# EUROPEAN PATENT APPLICATION

(11) **EP 4 307 756 A1**
(43) Date of publication of application: **17.01.2024**
(21) Application number: 22766197.2
(22) Date of filing: 02.03.2022
(51) Int. Cl.: H04W 24/06

(54) **NETWORK ANALYSIS TRANSFERRING METHOD AND DEVICE, AND READABLE STORAGE MEDIUM**

(30) Priority: 09.03.2021 CN 202110256733
(71) Applicant: Datang Mobile Communications Equipment Co., Ltd., Beijing 100085 (CN)
(72) Inventor: DUAN, Xiaoyan, Beijing 100085 (CN)
(74) Representative: Studio Torta S.p.A.
(86) International application number: PCT/CN2022/078772
(87) International publication number: WO 2022/188671

(57) **Abstract**

A transfer method for network analytics, a transfer apparatus for network analytics and a readable storage medium are disclosed in the present disclosure, which are related to the field of communication technology, so as to ensure that a target network function entity obtains an accurate analytics result in a case that the network analytics transfer is occurred. The method includes: acquiring, by a target network function entity, model information of a target network analytics from a source network function entity; acquiring, by the target network function entity, a model of the target network analytics according to the model information of the target network analytics; executing, by the target network function entity, a network analytics using the model to obtain an analytics result of the target network analytics, where the target network analytics is a network analytics transferred from the source network function entity to the target network function entity.

## Description

### CROSS REFERENCE OF RELATED APPLICATION

The present application claims a priority of Chinese patent application No. 202110256733.1 filed on March 9, 2021, the content of which is incorporated herein by reference in its entirety.

### TECHNICAL FIELD

The present disclosure relates to the field of communications technology, and in particular to a transfer method for network analytics, a transfer apparatus for network analytics and a readable storage medium.

### BACKGROUND

In order to realize the intelligent analytics and control of the network, the network data analytics function (NWDAF) is introduced into the related network. Based on artificial intelligence (AI) algorithm, NWDAF provides network data analytics (referred to as "network analytics") services for other network function entities through interaction with other network function entities.

The main functions of NWDAF include: 1) receiving the network analytics request sent by the network function entity, acquiring network data from the data source network function entity (data provider) according to the network analytics request, and using the network data as the input data required for AI model training and/or network analytics; 2) using the collected data for model training; 3) using the trained model and collected data for network analytics to obtain analytics information; 4) providing analytics information to other network function entities, where the trained model is crucial to obtaining accurate network analytics information.

During the network analytics process of NWDAF, due to some reasons (such as NWDAF overload, occurrence of failure, analytic target user equipment (UE) moving out of the NWDAF service area, etc.), NWDAF may need to transfer the ongoing network analytics to other NWDAFs.

Then, in a case that the network analytics transfer occurs, how to ensure that the target NWDAF obtains an accurate analytics result is a problem that needs to be solved.

### SUMMARY

Embodiments of the present disclosure provide a transfer method for network analytics, a transfer apparatus for network analytics and a readable storage medium, so as to ensure that a target network function entity obtains an accurate analytics result in a case that the network analytics transfer occurs.

In a first aspect, an embodiment of the present disclosure provides a transfer method for network analytics, which includes:
acquiring, by a target network function entity, model information of a target network analytics from a source network function entity;
acquiring, by the target network function entity, a model of the target network analytics according to the model information of the target network analytics;
executing, by the target network function entity, a network analytics using the model to obtain an analytics result of the target network analytics,
where the target network analytics is a network analytics transferred from the source network function entity to the target network function entity.

The acquiring, by the target network function entity, model information of the target network analytics from the source network function entity includes:
acquiring, by the target network function entity, the model information of the target network analytics from the source network function entity in a preparation process of a network analytics transfer.

The model information of the target network analytics includes an address of a first model file, and/or, information of a first network function entity, where the first network function entity is configured to provide the model of target network analytics to the source network function entity.

The acquiring, by the target network function entity, model information of the target network analytics from the source network function entity includes:
acquiring, by the target network function entity, an analytics context of the target network analytics from the source network function entity, where the analytics context includes the model information of the target network analytics;
obtaining, by the target network function entity, the model information of the target network analytics from the analytics context.

In a case that the model information of the target network analytics includes the address of the first model file, the acquiring, by the target network function entity, the model of the target network analytics according to the model information of the target network analytics, includes:
acquiring, by the target network function entity, a model file according to the address of the first model file;
acquiring, by the target network function entity, the model of the target network analytics according to the model file.

In a case that the model information of the target network analytics includes information of the first network function entity, the acquiring, by the target network function entity, the model of the target network analytics according to the model information of the target network analytics, includes:
acquiring, by the target network function entity, a model file from the first network function entity according to the information of the first network function entity;
acquiring, by the target network function entity, the model of the target network analytics according to the model file.

The acquiring, by the target network function entity, the model file from the first network function entity according to the information of the first network function entity, includes:
sending, by the target network function entity, a subscription transfer request to the first network function entity, where the subscription transfer request is configured to request to transfer a network analytics model subscription of the source network function entity to the target network function entity;
receiving, by the target network function entity, an address of a second model file, where the address of the second model file is sent by the first network function entity according to the subscription transfer request;
acquiring, by the target network function entity, the model file according to the address of the second model file.

After acquiring the model of the target network analytics, the method further includes:
in a case that the target network function entity successfully acquires the model of the target network analytics, sending, by the target network function entity, a response message of accepting the network analytics transfer to the source network function entity.

The method further includes:
receiving, by the target network function entity, updated model information of the target network analytics sent by the source network function entity in an execution process of the network analytics transfer;
updating, by the target network function entity, the model according to the updated model information of the target network analytics.

After the obtaining the analytics result of the target network analytics, the method further includes:
updating the model by the target network function entity;
sending, by the target network function entity, an update request to the first network function entity, where the update request includes updated model information of the target network function entity, and is configured to update a model corresponding to the model file by the first network function entity.

The executing, by the target network function entity, the network analytics using the model includes:
in a case that the model of the target network analytics is successfully acquired, executing, by the target network function entity, the network analytics using the model.

In a second aspect, an embodiment of the present disclosure provides a transfer method for network analytics, which includes:
sending, by a source network function entity, model information of a target network analytics to a target network function entity, so that the target network function entity acquires a model of the target network analytics according to the model information of the target network analytics and uses the model to execute network analytics, thereby obtaining an analytics result of the target network analytics,
where the target network analytics is a network analytics transferred from the source network function entity to the target network function entity.

After the source network function entity sends the model information of the target network analytics to the target network function entity, the method further includes:
receiving, by the source network function entity, a response of accepting a network analytics transfer sent by the target network function entity;
   or,
receiving, by the source network function entity, a response of refusing to accept the network analytics transfer sent by the target network function entity, and selecting other network function entities except the target network function entity to perform the network analytics transfer, where the response of refusing to accept the network analytics transfer represents that the target network function entity fails to obtain the model.

In a third aspect, an embodiment of the present disclosure provides a transfer apparatus for network analytics, applied to a target network function entity, which includes a memory, a transceiver, and a processor,
where the memory is configured to store a computer program; the transceiver is configured to send and receive data under control of the processor; and the processor is configured to read the computer program in the memory and execute the following operations of:
acquiring model information of a target network analytics from a source network function entity;
acquiring a model of the target network analytics according to the model information of the target network analytics;
executing a network analytics using the model to obtain an analytics result of the target network analytics,
where the target network analytics is a network analytics transferred from the source network function entity to the target network function entity.

The processor is further configured to acquire the model information of the target network analytics from the source network function entity in a preparation process of a network analytics transfer.

The model information of the target network analytics includes an address of a first model file, and/or, information of a first network function entity, where the first network function entity is configured to provide the model of target network analytics to the source network function entity.

The processor is further configured to:
acquire an analytics context of the target network analytics from the source network function entity, where the analytics context includes the model information of the target network analytics;
obtain the model information of the target network analytics from the analytics context.

The processor is further configured to:
acquire a model file according to the address of the first model file;
acquire the model of the target network analytics according to the model file.

The processor is further configured to:
acquire a model file from the first network function entity according to the information of the first network function entity;
acquire the model of the target network analytics according to the model file.

The processor is further configured to:
send a subscription transfer request to the first network function entity, where the subscription transfer request is configured to request to transfer a network analytics model subscription of the source network function entity to the target network function entity;
receive an address of a second model file sent by the first network function entity according to the subscription transfer request;
acquire the model file according to the address of the second model file.

The processor is further configured to:
sending, in a case that the model of the target network analytics is acquired successfully, a response message of accepting the network analytics transfer to the source network function entity.

The processor is further configured to:
receive, by the target network function entity, updated model information of the target network analytics sent by the source network function entity in an execution process of the network analytics transfer;
update the model according to the updated model information of the target network analytics.

The processor is further configured to:
update the model;
send an update request to the first network function entity, where the update request includes updated model information of the target network function entity, and is configured to update a model corresponding to the model file by the first network function entity.

The processor is further configured to:
execute, in a case that the model of the target network analytics is successfully acquired, the target network analytics using the model.

In a fourth aspect, an embodiment of the present disclosure provides a transfer apparatus for network analytics, applied to a source network function entity, including a memory, a transceiver, and a processor,
where the memory is configured to store a computer program; the transceiver is configured to send and receive data under control of the processor; and the processor is configured to read the computer program in the memory and perform the following operations of:
sending model information of a target network analytics to a target network function entity, so that the target network function entity acquires a model of the target network analytics according to the model information of the target network analytics and uses the model to execute network analytics, thereby obtaining an analytics result of the target network analytics,
where the target network analytics is a network analytics transferred from the source network function entity to the target network function entity.

The processor is also configured to read the program and perform the following steps:
receiving a response of accepting a network analytics transfer sent by the target network function entity;
   or,
receiving a response of refusing to accept the network analytics transfer sent by the target network function entity, and selecting other network function entities except the target network function entity to perform the network analytics transfer, where the response of refusing to accept the network analytics transfer represents that the target network function entity fails to obtain the model.

In a fifth aspect, an embodiment of the present disclosure provides a transfer apparatus for network analytics, applied to a target network function entity, including:
a first acquiring unit, configured to acquire model information of a target network analytics from a source network function entity;
a second acquiring unit, configured to acquire a model of the target network analytics according to the model information of the target network analytics;
a first processing unit, configured to execute a network analytics using the model to obtain an analytics result of the target network analytics,
where the target network analytics is a network analytics transferred from the source network function entity to the target network function entity.

The first acquiring unit may include:
a first receiving subunit, configured to acquire an analytics context of the target network analytics from the source network function entity, where the analytics context includes the model information of the target network analytics;
a first acquiring subunit, configured to obtain the model information of the target network analytics from the analytics context.
In a case that the model information of the target network analytics includes the address of the first model file, the first processing unit may include:
a first acquiring subunit, configured to acquire a model file according to the address of the first model file;
a first processing subunit, configured to acquire the model of the target network analytics according to the model file.

In a case that the model information of the target network analytics includes information of the first network function entity, the first processing unit may include:
a second acquiring subunit, configured to acquire a model file from the first network function entity according to the information of the first network function entity;
a second processing subunit, configured to acquire the model of the target network analytics according to the model file.

The second acquiring subunit includes:
a first sending module, configured to send a subscription transfer request to the first network function entity, where the subscription transfer request is configured to request to transfer a network analytics model subscription of the source network function entity to the target network function entity;
a first receiving module, configured to receive an address of a second model file sent by the first network function entity according to the subscription transfer request;
a first acquiring module, configured to acquire the model file according to the address of the second model file.

The second acquiring unit is further configured to send, by the target network function entity, a response message of accepting the network analytics transfer to the source network function entity, in a case that the target network function entity successfully acquires the model of the target network analytics.

The apparatus may also include:
a first receiving unit, configured to receive updated model information of the target network analytics sent by the source network function entity in an execution process of the network analytics transfer;
a first updating unit, configured to update the model according to the updated model information of the target network analytics.

The apparatus may also include:
a second updating unit, configured to update the model;
a first sending unit, configured to send an update request to the first network function entity, where the update request includes updated model information of the target network function entity, and is configured to update a model corresponding to the model file by the first network function entity.

The first processing unit is configured to execute, in a case that the model of the target network analytics is successfully acquired, the network analytics using the model to obtain an analytics result of the target network analytics.

In a sixth aspect, an embodiment of the present disclosure provides a transfer apparatus for network analytics, applied to a source network function entity, which includes:
a first sending unit, configured to send model information of a target network analytics to a target network function entity, so that the target network function entity acquires a model of the target network analytics according to the model information of the target network analytics and uses the model to execute network analytics, thereby obtaining an analytics result of the target network analytics,
where the target network analytics is a network analytics transferred from the source network function entity to the target network function entity.

The apparatus may also include:
a first receiving unit, configured to receive a response of accepting a network analytics transfer sent by the target network function entity;
a second receiving unit, configured to receive a response of refusing to accept the network analytics transfer sent by the target network function entity, and select other network function entities except the target network function entity to perform the network analytics transfer, where the response of refusing to accept the network analytics transfer represents that the target network function entity fails to obtain the model.
In a seventh aspect, an embodiment of the present disclosure provides a processor-readable storage medium, where the processor-readable storage medium is stored with a computer program, and the computer program is configured to cause the processor to execute the aforementioned method.

In the embodiment of the present disclosure, for the target network analytics transferred from the source network function entity to the target network function entity, the target network function entity may acquire a model of the target network analytics according to the model information of target network analytics acquired from the source network function entity, and use the model to execute the model analytics to obtain the analytics result of the target network analytics. In this way, the target network function entity can obtain a model suitable for the target network analytics to obtain the accurate network analytics result, thereby ensuring the network analytics performance in the process of network analytics transfer.

### BRIEF DESCRIPTION OF THE DRAWINGS

FIG. 1 is a first flowchart of a transfer method for network analytics provided by an embodiment of the present disclosure;
FIG. 2 is a second flowchart of the transfer method for network analytics provided by an embodiment of the present disclosure;
FIG. 3 is a third flowchart of the transfer method for network analytics provided by an embodiment of the present disclosure;
FIG. 4 is a fourth flowchart of the transfer method for network analytics provided by an embodiment of the present disclosure;
FIG. 5 is a fifth flowchart of the transfer method for network analytics provided by an embodiment of the present disclosure;
FIG. 6 is a first structural view of a transfer apparatus for network analytics provided by an embodiment of the present disclosure;
FIG. 7 is a second structural view of the transfer apparatus for network analytics provided by an embodiment of the present disclosure;
FIG. 8 is a third structural view of the transfer apparatus for network analytics provided by an embodiment of the present disclosure; and
FIG. 9 is a fourth structural view of the transfer apparatus for network analytics provided by an embodiment of the present disclosure.

### DETAILED DESCRIPTION

The term "and/or" in the embodiments of the present disclosure describes the association relationship of associated objects, which represents that there may be three relationships, for example, A and/or B, which may represent: A exists alone, A and B exist simultaneously, and B exists alone. The character "/" generally indicates that the contextual objects are an "or" relationship.

The term "plurality" in the embodiments of the present disclosure refers to two or more, and other quantifiers are similar.

The technical solution in the embodiments of the present disclosure will be described clearly and completely below with reference to the drawings in the embodiments of the present disclosure, obviously, the described embodiments are only part of the embodiments of the present disclosure, rather than all of embodiments. Based on the embodiments in the present disclosure, all other embodiments obtained by those ordinarily skilled in the art without making creative efforts belong to the protection scope of the present disclosure.

Embodiments of the present disclosure provide a transfer method for network analytics, a transfer apparatus for network analytics, and a readable storage medium, so as to ensure network analytics performance in the process of the network analytics transfer.

The method and the apparatus are conceived based on the same application. Since the principles of solving problems of the method and the apparatus are similar, the implementation of the apparatus and the method may be referred to each other, and the repetition will not be repeated.

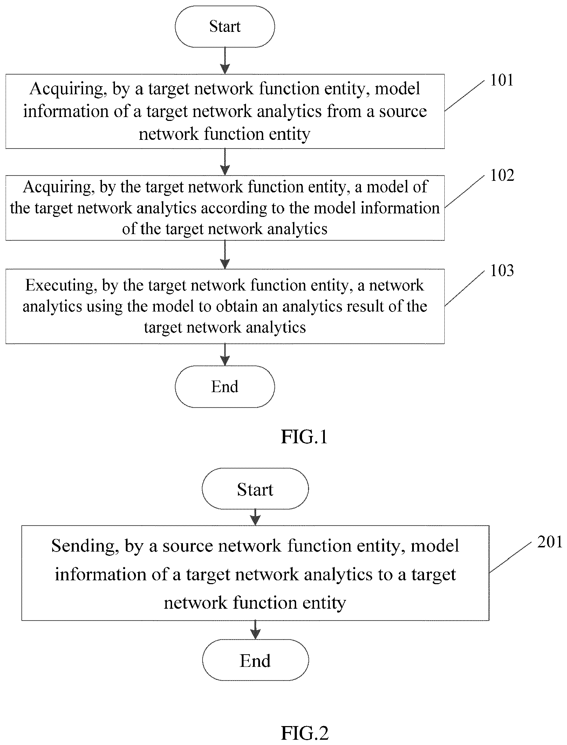

Referring to FIG. 1, FIG. 1 is a flowchart of a transfer method for network analytics provided by an embodiment in the present disclosure. As shown in FIG. 1, the method includes the following steps:
step 101, acquiring, by a target network function entity, model information of a target network analytics from a source network function entity;
the target network analytics is a network analytics transferred from the source network function entity to the target network function entity, and may be an ongoing network analytics of any source network function entity.

In this embodiment of the present disclosure, the network function entity may be, for example, an entity having a network data analytics function such as NWDAF.

As mentioned above, during the network analytics process of the source network function entity, due to some reasons (such as NWDAF overload, failure occurred, analytics target UE moving out of the NWDAF service area, etc.), the source network function entity may need to transfer the ongoing network analytics to other NWDAFs. The target network function entity is one or more of the above-mentioned "other NWDAFs".

In an embodiment of the present disclosure, the model information of the target network analytics includes an address of a first model file, and/or, information of a first network function entity, and the first network function entity is configured to provide a model of the target network analytics to the source network function entity, where the network analytics model may be obtained through the address of the first model file.

In an embodiment of the present disclosure, the target network function entity acquires an analytics context of the target network analytics from the source network function entity, where the analytics context includes the model information of the target network analytics; and obtains the model information of the target network analytics from the analytics context.

In another embodiment of the present disclosure, the analytics context includes the address of the first model file, and/or, the information of the first network function entity.

Specifically, in this step, the model information of the target network analytics may be obtained through at least two methods as follows.
(1) The target network function entity receives the request from the source network function entity, and acquires the analytics context from the source network function entity according to an identity of the analytics context in the request, where the request includes the identity of the analytics context; the analytics context includes the model information of the target network analytics.
(2) The target network function entity acquires the analytics context of the target network analytics from the source network function entity, where the analytics context includes the model information of the target network analytics.

Through the above-mentioned methods, the target network function entity can flexibly acquire the model information of the target network analytics.

Step 102, acquiring, by the target network function entity, a model of the target network analytics according to the model information of the target network analytics.

Depending on the different model information of the target network analytics, here, there may be different methods to acquire the model of the target network analytics.

In a case that the model information of the target network analytics includes the address of the first model file, the target network function entity acquires a model file according to the address of the first model file, and acquires the model of the target network analytics according to the model file.

In a case that the model information of the target network analytics includes information of the first network function entity, the target network function entity acquires a model file from the first network function entity according to the information of the first network function entity, and acquires the model of the target network analytics according to the model file.

Specifically, in this manner, the target network function entity sends a subscription transfer request to the first network function entity, and the subscription transfer request is configured to request to transfer the network analytics model subscription of the source network function entity to the target network function entity. Then, the target network function entity receives the address of the second model file sent by the first network function entity according to the subscription transfer request, and acquires the model file according to the address of the second model file.

If the model information of the target network analytics includes the address of the first model file and the information of the first network function entity, then the target network function entity may select information to use for obtaining the model of the target network analytics according to a preset policy. For example, the target network function entity may choose to acquire the model of the target network analytics according to the address of the first model file, or the target network function entity may choose to acquire the model of the target network analytics and the like according to the information of the first network function entity.

The model file may be understood as a file including trained model parameters, and the process of acquiring the model may be understood as a process of using the acquired model parameters to configure the model.

Step 103, executing, by the target network function entity, a network analytics using the model to obtain an analytics result of the target network analytics.

For example, in this step, the target network function entity obtains network analytics information by using the model and collected data, and provides the network analytics information.

In the embodiment of the present disclosure, for the target network analytics transferred from the source network function entity to the target network function entity, the target network function entity may acquire the model of the target network analytics according to the model information of the target network analytics acquired from the source network function entity, and execute the network analytics using the model to obtain an analytics result of the target network analytics. Through this method, the target network function entity may acquire a model suitable for the target network analytics to obtain an accurate network analytics result, thereby ensuring network analytics performance in the process of network analytics transfer.

In an embodiment of the present disclosure, step 101 may occur in a preparation process of the network analytics transfer, that is, the target network function entity acquires the model information of the target network analytics from the source network function entity in the preparation process of the network analytics transfer. At this time, on the basis of the above embodiments, in an execution process of the network analytics transfer, the target network function entity receives the updated model information of the target network analytics sent by the source network function entity, and updates the model according to the updated model information of the target network analytics, thereby further ensuring the accuracy of the acquired model.

The whole network analytics process of target network analytics may include multiple times of network analytics. During the whole process, the target network function entity may update the acquired model according to the information provided by the source network function entity or the information acquired by itself. However, for a certain network analytics, the model usually does not need to be updated during the network analytics process.

On the basis of the above embodiments, in order to ensure that the source network function entity acquires the result message of network analytics transfer in time, in the above embodiments, if the target network function entity successfully acquires the model of the target network analytics, the target network function entity sends response information of accepting network analytics transfer to the source network function entity.

In the above embodiments, for step 103, when the model of target network analytics is successfully acquired, the target network function entity executes the network analytics using the model. That is to say, in practical applications, the process of acquiring the model in step 102 may succeed or fail. If successful, step 103 is executed. When acquiring the model of target network analytics fails, the target network function entity indicates to the source network function entity that network analytics transfer fails, so that the source network function entity can select other NWDAFs for performing the network analytics transfer. When acquiring the model of target network analytics fails, step 103 is not executed again.

In the above embodiment, when the model information of the target network analytics includes the information of the first network function entity, after obtaining the analytics result of the target network analytics, the target network function entity may also update the model, and send an update request to the first network function entity, where the update request includes updated model information of the target network function entity, and is configured to update a model corresponding to the model file by the first network function entity. Through this method, a federated learning relationship may be established between the target network function entity and the first network function entity.

Referring to FIG. 2, FIG. 2 is a flowchart of a transfer method for network analytics provided by an embodiment of the present disclosure. As shown in FIG. 2, the method includes the following steps:
Step 201. sending, by a source network function entity, model information of a target network analytics to a target network function entity, so that the target network function entity acquires a model of the target network analytics according to the model information of the target network analytics and uses the model to execute network analytics, thereby obtaining an analytics result of the target network analytics,
where the target network analytics is a network analytics transferred from the source network function entity to the target network function entity.

The model information of the target network analytics includes an address of a first model file, and/or, information of a first network function entity, the first network function entity is configured to provide the model of target network analytics to the source network function entity, where the network analytics model may be obtained through the address of the first model file.

The source network function entity may send an analytics context to the target network function entity, and the analytics context includes model information of the target network analytics.

Specifically, in this step, the model information of the target network analytics may be sent to the target network function entity through at least two methods as follows.
(1) The source network function entity sends an analytics context to the target network function entity, where the analytics context includes model information of the target network analytics.
(2) The source network function entity sends a request to the target network function entity, where the request includes an identity of the analytics context. Then, the source network function entity sends an analytics context to the target network function entity, where the analytics context includes model information of the target network analytics.

In the embodiment of the present disclosure, for the target network analytics transferred from the source network function entity to the target network function entity, the target network function entity may acquire the model of the target network analytics according to model information of the target network analytics acquired from the source network function entity, and use the model to execute the network analytics to obtain the analytics result of the target network analytics. Through this method, the target network function entity may acquire a model suitable for target network analytics to acquire an accurate network analytics result, thereby ensuring network analytics performance in the process of network analytics transfer.

In an embodiment of the present disclosure, in the preparation process of the network analytics transfer, the source network function entity sends model information of the target network analytics to the target network function entity.

In practical applications, there may be one or more target network function entities. Then, if there are more than one, the source network function entity may select a network function entity for network analytics transfer from the feedback of multiple target network function entities. Then at this time, the source network function entity receives a response of accepting network analytics transfer sent by the target network function entity; or, the source network function entity receives a response of refusing to accept the network analytics transfer sent by the target network function entity, and selects other network function entities except the target network function entity to perform the network analytics transfer, where the response of refusing to accept the network analytics transfer represents that the target network function entity fails to obtain the model.

In this case, in the execution process of network analytics transfer, the source network function entity sends updated model information of the target network analytics to the target network function entity.

On the basis of the above embodiments, in order to save resources, the source network function entity sends a cancel model subscription request to the first network function entity, and the cancel model subscription request is configured to indicate that the source network function entity cancels subscription of the model information of the target network analytics from the first network function entity.

The technical solutions provided by the embodiments of the present disclosure may be applied to various systems, especially 5G systems. For example, the applied system may be global system of mobile communication (GSM) system, code division multiple access (CDMA) system, wideband code division multiple access (WCDMA) general packet radio service (GPRS) system, long term evolution (LTE) system, LTE frequency division duplex (FDD) system, LTE time division duplex (TDD) system, long term evolution advanced (LTE-A) system, universal mobile telecommunications system (UMTS), worldwide interoperability for microwave access (WiMAX) system, 5G new radio (NR) system, etc. These various systems include terminal devices and network devices. The system may also include a core network part, such as an evolved packet system (EPS), a 5G system (5GS), and the like.

In the following, the specific implementation process of the embodiments of the present disclosure will be described in combination with different situations. In the following process, the NWDAF is taken as an example of a network function entity for description.

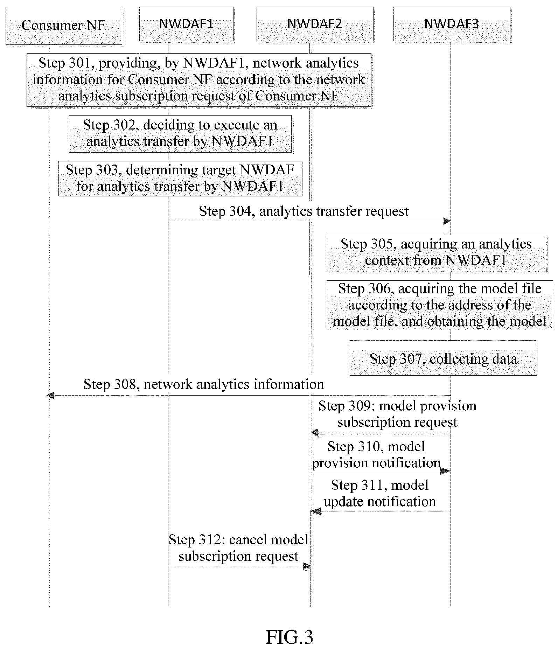

Referring to FIG. 3, FIG. 3 is a flowchart of a transfer method for network analytics according to an embodiment of the present disclosure. In FIG. 3, the source NWDAF (NWDAF1) provides the address of the model file to the target NWDAF (NWDAF3).

As shown in FIG. 3, the method of the embodiment of the present disclosure includes:
Step 301, providing, by NWDAF1, network analytics information for Consumer Network Function (Consumer NF) according to the network analytics subscription request of Consumer Network Function (Consumer NF).

The network analytics subscription request of Consumer NF includes information related to the network analytics provided by NWDAF1 requested by Consumer NF, which includes:
(a) One or more analytics identities (Analytics ID), configured to identify the type of network analytics requested, for example, Analytics ID = "Service Experience Analytics"(Service Experience), Analytics ID = "UE Mobility Analytics" (UE Mobility), etc.
(b) Analytics filter information, such as the analytic target UE or UE group identity, area identity, slice identity, etc.

Optionally, NWDAF1 acquires an initial training model from NWDAF2, uses the initial training model and collected data to generate a local model and network analytics information, and sends the local model to NWDAF2.

NWDAF2 updates the model of NWDAF2 based on the local model of NWDAF1, and then provides the updated model to NWDAF 1; in this way, a better model for the network analytics is obtained through multiple cycles, thereby improving the performance of the network analytics (such as prediction accuracy, real-time performance).

In practical applications, NWDAF2 may also be other network function entity that provides a model, such as model repository network function entity instead of NWDAF; at this time, the network function entity is required to also support federated learning capability.

Step 302, deciding, by NWDAF1, to execute an analytics transfer.

Step 303, querying, by NWDAF1, a network function database function (NRF) or a local configuration, and determining Target NWDAF for analytics transfer, that is, NWDAF3.

Step 304, initiating, by NWDAF1, an analytics transfer request to NWDAF3.

Step 305, acquiring, by NWDAF3, an analytics context from NWDAF1. In an embodiment of the present disclosure, the analytics context may include one or more of the following information:
(a) One or more Analytics IDs, configured to identify the type of network analytics requested, such as Analytics ID = "Service Experience", Analytics ID = "UE Mobility", etc.
(b) Information related to the model for one or more of the above-mentioned Analytics IDs.

Specifically, the related information may include the address of the model file, for example: the address of the model file in NWDAF1, or the address of the latest model file that NWDAF1 acquires from NWDAF2, which may be expressed in a form of, for example, a Uniform Resource Locator (URL) or a Fully Qualified Domain Name (FQDN).

For example: http://model.nwdaf.com.cn/nwdaf1_model_ServiceExperience.mdl,
nwdafl_model_ServiceExperience@model.nwdaf.com.cn; or
http://model.nwdaf.com.cn/nwdaf2_model_ServiceExperience.mdl;
nwdaf2_model_ServiceExperience@model.nwdaf.com.cn.

Optionally, the related information may also include NWDAF2 information, such as: NWDAF2 identity, address (such as FQDN or Internet Protocol (IP) address), supported services (such as providing, updating and acquiring models), capability indication supporting Federated Learning, supporting which models are provided (e.g. model for a specific Analytics ID), service area, and other information.
(c) Information related to data collection for one or more of the above-mentioned Analytics IDs.

For example: information (such as identity or address) of one or more network function entities (NF) that provide data, and data collection requirements (such as time, period).
(d) Data collected by NWDAF1 for one or more of the above-mentioned Analytics IDs.

Specifically, it may be the data content or the data address collected by NWDAF1, and the latter may be expressed in the form of, for example, URL or FQDN.
(e) Analytics information output by NWDAF1 for one or more of the above-mentioned Analytics IDs.

Specifically, it may be the analytics information content or the analytics information address output by NWDAF1, and the latter may be expressed in the form of, for example, URL or FQDN.
(f) Analytics filter information, such as analytic target UE or UE group identity, area identity, slice identity, etc.
where step 305 may be implemented through the following methods:
method one:
initiating, by NWDAF1, an analytics transfer request to NWDAF3.

Specifically, the analytics transfer request may use an analytics information subscription (Nnwdaf_AnalyticsSubscription_Subscribe) request, which includes: analytics transfer indication, information related (that is, information related to the network analytics subscribed by the Consumer NF to NWDAF1 in step 301) to the network analytics subscription requested to be transferred to NWDAF3, analytics context identity, etc. NWDAF3 sends a Nnwdaf_AnalyticsSubscription_Subscribe reply to NWDAF1 to confirm acceptance of network analytics transfer.
acquiring, by NWDAF3, the analytics context needs to be transferred from NWDAF1 according to the analytics context identity.

Method 2:
initiating, by NWDAF1, a Nnwdaf_AnalyticsSubscription_Subscribe request to NWDAF3, which includes: analytics transfer indication, information related (that is, information related to the network analytics provided by NWDAF1 requested by Consumer NF in step 301) to the network analytics subscription requested to be transferred to NWDAF3, analytics context, etc.
sending, by NWDAF3, a Nnwdaf_AnalyticsSubscription_Subscribe reply to NWDAF1 to confirm acceptance of analytics transfer.

Step 306, acquiring, by NWDAF3, the model file according to the address of the model file, and obtaining the model for one or more of the above-mentioned Analytics IDs.

Step 307, collecting, by NWDAF3, data required for performing the analytics from other NFs according to the data collection related information provided by NWDAF1.

Step 308, obtaining, by NWDAF3, analytics information by using the acquired model and collected data, and providing network analytics information to Consumer NF.

If NWDAF1 provides the information of NWDAF2 to NWDAF3 in step 305, then this embodiment of the present disclosure may further include the following steps:

Step 309: initiating, by NWDAF3, a model provision subscription (Nnwdaf_ModelProvision_Subscribe) request to NWDAF2 according to the information of NWDAF2, which includes: 1) one or more of above-mentioned Application IDs, or analytics filter information, and/or, 2) an indication (such as the notification correlation information of NWDAF1, or the updated model subscription (Replaced model subscription) ID=NWDAF1 subscription identity (subscription ID)) transferring the model subscription of NWDAF1 to NWDAF3, thereby requesting to subscribe the updated model from NWDAF2.

Step 310, sending, by NWDAF2, a model provision notification (Nnwdaf_ModelProvision_Notify) to NWDAF3, which includes updated model information (such as the address of the model file of NWDAF2).

Step 311, sending, by NWDAF3, a model update notification (Nnwdaf_ModelUpdate_Notify) to NWDAF2, which includes updated NWDAF3 local model information (such as the address of the model file of NWDAF3), so that NWDAF2 can update the model of NWDAF2 based on this information. That is, NWDAF2 and NWDAF3 establish a federated learning relationship.

Step 312: initiating, by NWDAF1, If NWDAF1 no longer needs to acquire the model (for example, NWDAF1 transfers all the network analytics executed by itself to NWDAF3) from NWDAF2, a cancel model subscription (Nnwdaf_ModelProvision_UnSubscribe) request to NWDAF2, canceling the subscription of the updated model from NWDAF2.

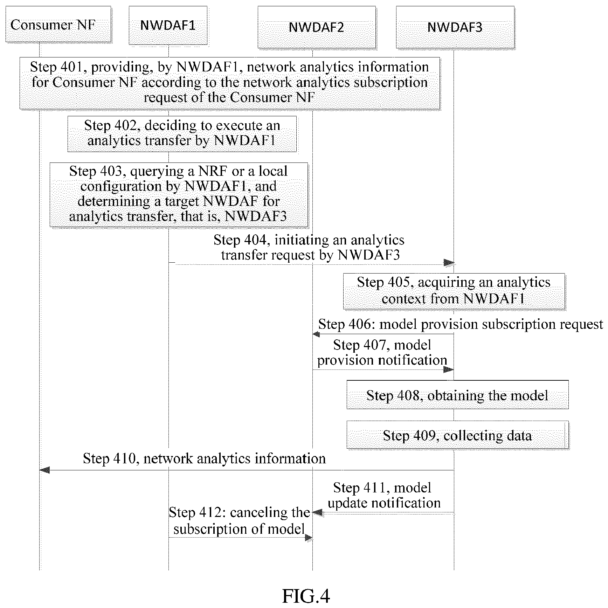

Referring to FIG. 4, FIG. 4 is a flowchart of a transfer method for network analytics according to an embodiment of the present disclosure. In FIG. 4, Source NWDAF (NWDAF1) provides information about the model file provider (model provider NWDAF) (such as NWDAF2) to TargetNWDAF (such as NWDAF3).

As shown in FIG. 4, the method of the embodiment of the present disclosure includes:

Step 401, providing, by NWDAF1, network analytics information for Consumer NF according to the network analytics subscription request of the Consumer NF.

The network analytics subscription request of the Consumer NF includes information related to the network analytics provided by NWDAF1 requested by the Consumer NF, which includes:
(a) one or more Analytics IDs, configured to identify the type of network analytics requested, such as Analytics ID = "Service Experience", Analytics ID = "UE Mobility", etc.
(b) analytics filter information, such as the analytic target UE or UE group identity, area identity, slice identity, etc.

Optionally, NWDAF1 acquires an initial training model from NWDAF2, uses the initial training model and collected data to generate a local model and network analytics information, and sends the local model to NWDAF2.

NWDAF2 updates the model of NWDAF2 based on the local model of NWDAF1, and then provides the updated model to NWDAF 1; in this way, a better model for the network analytics is obtained through multiple cycles, thereby improving the performance of the network analytics (such as prediction accuracy, real-time performance).

In practical applications, NWDAF2 may also be other network function entity that provides a model, such as model repository network function entity instead of NWDAF; at this time, the network function entity is required to also support the federated learning capability.

Step 402, deciding, by NWDAF1, to execute an analytics transfer.

Step 403, querying, by NWDAF1, a NRF or a local configuration, and determining Target NWDAF for analytics transfer, that is, NWDAF3.

Step 404, initiating, by NWDAF1, an analytics transfer request to NWDAF3.

Step 405, acquiring, by NWDAF3, an analytics context from NWDAF1. In an embodiment of the present disclosure, the analytics context may include one or more of the following information:
(a) one or more Analytics IDs, configured to identify the type of network analytics requested, such as Analytics ID = "Service Experience", Analytics ID = "UE Mobility", etc.
(b) information related to the model for one or more of the above-mentioned Analytics IDs.

Specifically, the related information may include NWDAF2 information, such as: NWDAF2 identity, address (such as FQDN or IP address), supported services (such as providing, updating and acquiring models), capability indication supporting Federated Learning, supporting which models are provided (e.g. model for a specific Analytics ID), service area, and other information.
(c) Information related to data collection for one or more of the above-mentioned Analytics IDs.

For example: information (such as identity or address) of one or more network function entities NF that provide data, and data collection requirements (such as time, period).
(d) Data collected by NWDAF1 for one or more of the above-mentioned Analytics IDs.

Specifically, it may be the data content or the data address collected by NWDAF1, and the latter may be expressed in the form of, for example, URL or FQDN.
(e) Analytics information output by NWDAF1 for one or more of the above-mentioned Analytics IDs.

Specifically, it may be the analytics information content or the analytics information address output by NWDAF1, and the latter may be expressed in the form of, for example, URL or FQDN.
(f) Analytics filter information, such as analytic target UE or UE group identity, area identity, slice identity, etc.
where step 405 may be implemented through the following methods:
method one:
initiating, by NWDAF1, an analytics transfer request to NWDAF3.

Specifically, the analytics transfer request may use the Nnwdaf_AnalyticsSubscription_Subscribe request, which includes: analytics transfer indication, information related (that is, information related to the network analytics subscribed by the Consumer NF to NWDAF1 in step 401) to the network analytics subscription requested to be transferred to NWDAF3, analytics context identity, etc. NWDAF3 sends a Nnwdaf_AnalyticsSubscription_Subscribe reply to NWDAF1 to confirm acceptance of network analytics transfer.
acquiring, by NWDAF3, the analytics context needs to be transferred from NWDAF1 according to the analytics context identity.

Method 2:
initiating, by NWDAF1, a Nnwdaf_AnalyticsSubscription_Subscribe request to NWDAF3, which includes: analytics transfer indication, information related (that is, information related to the network analytics provided by NWDAF1 requested by Consumer NF in step 401) to the network analytics subscription requested to be transferred to NWDAF3, analytics context, etc.
sending, by NWDAF3, a Nnwdaf_AnalyticsSubscription_Subscribe reply to NWDAF1 to confirm acceptance of analytics transfer.

Step 406: initiating, by NWDAF3, a Nnwdaf_ModelProvision_Subscribe request to NWDAF2, which includes: 1) one or more of the above-mentioned Application IDs, or analytics filter information, and/or, 2) an indication (such as Replaced Subscriber: NWDAF1 ID) transferring the model subscription of NWDAF1 to NWDAF3, thereby requesting to subscribe the updated model from NWDAF2.

Step 407, sending, by NWDAF2, the Nnwdaf_ModelProvision_Notify to NWDAF3, which includes the address of the model file of NWDAF2.

Step 408, acquiring, by NWDAF3, the model file according to the address of the model file of NWDAF2, and obtaining the model for one or more of the above-mentioned Analytics IDs.

Step 409, collecting, by NWDAF3, data required for performing the analytics from other NFs according to the data collection related information provided by NWDAF1.

Step 410, obtaining, by NWDAF3, analytics information by using the acquired model and collected data, and providing network analytics information to Consumer NF.

Step 411, sending, by NWDAF3, the Nnwdaf_ModelUpdate_Notify to NWDAF2, which includes updated NWDAF3 local model information (such as the address of the model file of NWDAF3), so that NWDAF2 can update the model of NWDAF2 based on this information; that is, NWDAF2 and NWDAF3 establish a federated learning relationship.

Step 412: initiating, by NWDAF1, If NWDAF1 no longer needs to acquire the model (for example, NWDAF1 transfers all analytics to NWDAF3) from NWDAF2, the Nnwdaf_ModelProvision_UnSubscribe request to NWDAF2, canceling the subscription of the updated model from NWDAF2.

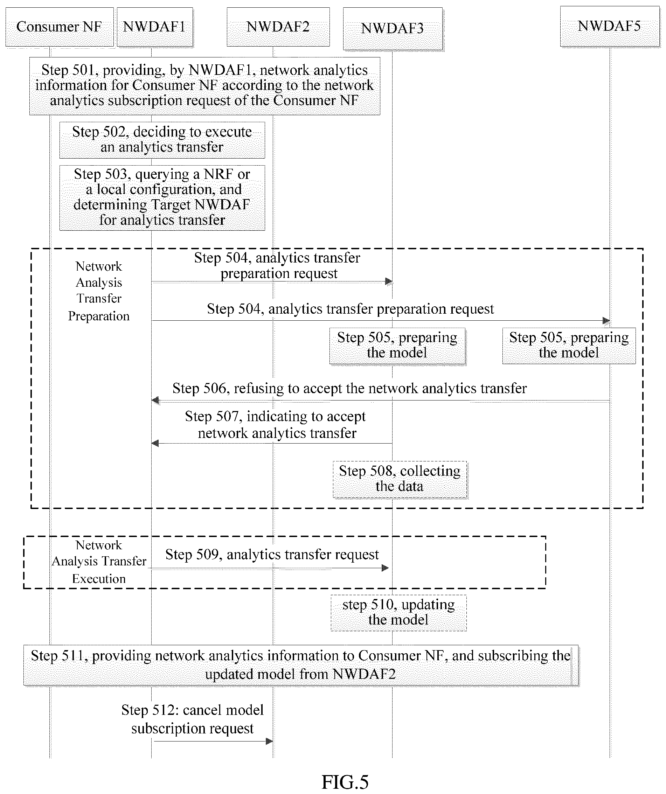

Referring to FIG. 5, FIG. 5 is a flowchart of a transfer method for network analytics according to an embodiment of the present disclosure. In FIG. 5, the transfer of the network analytics model is performed in a preparation process of the network analytics transfer.

As shown in FIG. 5, the method of the embodiment of the present disclosure includes:

Step 501, providing, by NWDAF1, network analytics information for Consumer NF according to the network analytics subscription request of the Consumer NF.

The network analytics subscription request of the Consumer NF includes information related to the network analytics provided by NWDAF1 requested by the Consumer NF, which includes:
(a) one or more Analytics IDs, configured to identify the type of network analytics requested, such as Analytics ID = "Service Experience", Analytics ID = "UE Mobility", etc.
(b) analytics filter information, such as the analytic target UE or UE group identity, area identity, slice identity, etc.

Optionally, NWDAF1 acquires an initial training model from NWDAF2, uses the initial training model and collected data to generate a local model and network analytics information, and sends the local model to NWDAF2.

NWDAF2 updates the model of NWDAF2 based on the local model of NWDAF1, and then provides the updated model to NWDAF 1; in this way, a better model for the network analytics is obtained through multiple cycles, thereby improving the performance of the network analytics (such as prediction accuracy, real-time performance).

In practical applications, NWDAF2 may also be other network function entity that provides a model, such as model repository network function entity instead of NWDAF; at this time, the network function entity is required to also support the federated learning capability.

Step 502, deciding, by NWDAF1, to execute an analytics transfer.

Step 503, querying, by NWDAF1, a NRF or a local configuration, and determining Target NWDAF for analytics transfer, that is, NWDAF3 and NWDAF5.

Step 504, initiating, by NWDAF1, an analytics transfer preparation request to NWDAF3 and NWDAF5 respectively.

The analytics transfer preparation request includes the analytics transfer preparation indication, information related to the network analytics subscription requested to be transferred to NWDAF3 (or NWDAF5), analytics context, etc. Alternatively, the analytics transfer preparation request includes an analytics transfer preparation indication, information related to the network analytics subscription requested to be transferred to NWDAF3 (or NWDAF5), identity of analytics context, etc.

The information included in the analytics context is the same as that of the embodiment shown in FIG. 3 or FIG. 4, that is, it includes model information required for analytics, such as the address of model file and/or information of NWDAF2; and other information, such as data collected or analytics information derived by NWDAF1.

NWDAF3 and NWDAF5 respectively acquire the analytics context from NWDAF1 according to the analytics transfer preparation request.

The method of acquiring the analytics context by NWDAF3 and NWDAF5 is the same as the process of the above-mentioned embodiment shown in FIG. 3 or FIG. 4.

Step 505, preparing, by NWDAF3 and NWDAF5, the model required for performing the analytics according to the analytics transfer preparation request.

Specifically, if the analytics transfer preparation request includes the address of the model file, then NWDAF3 and NWDAF5 acquire the model file according to the address of the model file.

If the analytics transfer preparation request includes the information of NWDAF2, then NWDAF3 and NWDAF5 respectively initiate a Nnwdaf_ModelProvision_Subscribe request to NWDAF2, which includes: 1) one or more Application IDs in the analytics context, or analytics filter information, and/or, 2) an indication (such as Replaced Subscriber : NWDAF1 ID) transferring the model subscription of NWDAF1 to NWDAF3 (or NWDAF5), thereby requesting to subscribe the updated model from NWDAF2. NWDAF2 sends Nnwdaf_ModelProvision_Notify to NWDAF3 and NWDAF5, which includes the address of model file of NWDAF2. NWDAF3 and NWDAF5 acquire the model file according to the address of model file of NWDAF2, thereby obtaining the model.

Step 506, finding, by NWDAF5, that the model required for analytics cannot be successfully prepared, for example: failing to acquire the model file according to the address of the model file, failing to acquire the model from NWDAF2 or other NWDAFs, NF, and sending, by NWDAF5, the Nnwdaf_AnalyticsSubscription_Subscribe reply to NWDAF1, where the Nnwdaf_AnalyticsSubscription_Subscribe reply is carried with an analytics transfer preparation failure indication, indicating that the network analytics transfer is refconfigured to be accepted. Specifically, the indication may also indicate that the analytics transfer (preparation) failed because the model cannot be acquired, such as "lack of model (model unavailable)". That is, NWDAF5 failed to acquire the model and refconfigured to accept the network analytics transfer.

Step 507, acquiring successfully, by NWDAF3, the model required for analytics, and sending Nnwdaf_AnalyticsSubscription_Subscribe reply to NWDAF1, indicating that the analytics transfer preparation is successful, and network analytics transfer is accepted.

Step 508, collecting, by NWDAF3, data required for performing the analytics from other NF according to the data collection related information provided by NWDAF1. Furthermore, NWDAF3 may use the acquired model and collected data to obtain analytics information, where this step 508 is an optional process.

The above-mentioned steps 504-508 belong to the preparation process of network analytics transfer.

Step 509, initiating, by NWDAF1, an analytics transfer request to NWDAF3, and acquiring, by NWDAF3, an updated analytics context from NWDAF1 according to the analytics transfer request. The updated analytics context here may include data collected by NWDAF1 after step 504, obtained analytics information, etc., and may also include updated model information, such as the address of latest model file,
where step 509 may be regarded as an execution process of network analytics transfer.

Step 510, updating, by NWDAF3, the model used for analytics using updated model information, data from NWDAF1 and/or analytics information. Specifically, NWDAF3 acquires the latest model file according to the address of latest model file, adjusts the model parameters acquired by NWDAF3 based on the model file, and uses the data and/or analytics information from NWDAF1 to further train the model, so as to obtain better model parameters.

Step 511, collecting, by NWDAF3, data required for analytics from other NFs according to the data collection related information provided by NWDAF1. NWDAF3 uses the acquired model and collected data to obtain analytics information and provides network analytics information to Consumer NF.

NWDAF3 initiates a Nnwdaf_ModelProvision_Subscribe request to NWDAF2 according to the information of NWDAF2, which includes: 1) one or more Application IDs in the analytics context, or analytics filter information, and/or, 2) instruction for transferring model subscription from NWDAF1 to NWDAF3 (for example, Notification correlation information of NWDAF1, or Replaced model subscription ID=NWDAF1 subscription ID), thereby requesting to subscribe the updated model from NWDAF2.

NWDAF3 sends Nnwdaf_ModelUpdate_Notify to NWDAF2, which includes updated NWDAF3 local model information (such as model file address of NWDAF3), so that NWDAF2 may update the NWDAF2 model based on this information; that is, NWDAF2 and NWDAF3 establish a federated learning relationship.

Step 512: If NWDAF1 no longer needs to acquire the model from NWDAF2 (for example, NWDAF1 transfers all analytics to NWDAF3), then NWDAF1 initiates a Nnwdaf_ModelProvision_UnSubscribe request to NWDAF2, thereby cancelling the subscription of the updated model from NWDAF2.

In the above embodiments, in the network analytics transfer process, the source NWDAF provides the target NWDAF with the model currently used by the network analytics being transferred or the information of the model provider, so that the target NWDAF can obtain a model suitable for the network analytics being transferred, so as to obtain the desired network analytics performance (such as analytics accuracy), and avoid or reduce the required time of the target NWDAF for analytics transfer training a new analytics model, thereby improving the success rate of analytics transfer.

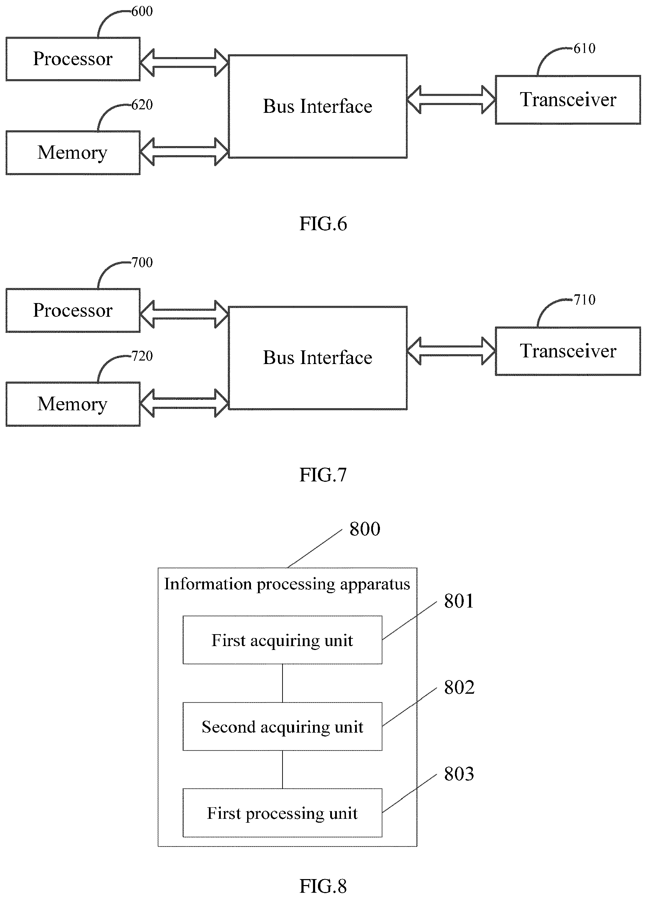

As shown in FIG. 6, the information processing apparatus of the embodiment of the present disclosure, applied to a target network function entity, which includes: a processor 600, configured to read a program in a memory 620, and execute the following process:
acquiring model information of a target network analytics from a source network function entity;
acquiring a model of the target network analytics according to the model information of the target network analytics;
executing a network analytics using the model to obtain an analytics result of the target network analytics,
where the target network analytics is a network analytics transferred from the source network function entity to the target network function entity.

In FIG. 6, the bus architecture may include any quantity of interconnected buses and bridges, specifically one or more processors represented by the processor 600 and various circuits of the memory represented by the memory 620 are linked together. The bus architecture may also link together various other circuits such as peripherals, voltage regulators, and power management circuits, etc., which are well known in the art and therefore will not be further described herein. The bus interface provides the interface. Transceiver 610 may be a plurality of elements, including a transmitter and a receiver, which provide a unit for communicating with various other apparatuses over transmission media. The processor 600 is responsible for managing the bus architecture and general processing, and the memory 620 may store data used by the processor 600 when performing operations.

The processor 610 may be a central processing unit (CPU), an application specific integrated circuit (ASIC), a field programmable gate array (FPGA) or a complex programmable logic device (CPLD), the processor can also adopt a multi-core architecture.

The processor 600 is responsible for managing the bus architecture and general processing, and the memory 620 may store data used by the processor 600 when performing operations.

The processor 600 is also configured to read the program and perform the following steps:
acquiring the model information of the target network analytics from the source network function entity in a preparation process of a network analytics transfer.

The model information of the target network analytics includes an address of a first model file, and/or, information of a first network function entity, where the first network function entity is configured to provide the model of target network analytics to the source network function entity.

The processor 600 is also configured to read the program and perform the following steps:
acquiring an analytics context of the target network analytics from the source network function entity, where the analytics context includes the model information of the target network analytics;
obtaining the model information of the target network analytics from the analytics context.

The processor 600 is also configured to read the program and perform the following steps:
acquiring a model file according to the address of the first model file;
acquiring the model of the target network analytics according to the model file.

The processor 600 is also configured to read the program and perform the following steps:
acquiring a model file from the first network function entity according to the information of the first network function entity;
acquiring the model of the target network analytics according to the model file.

The processor 600 is also configured to read the program and perform the following steps:
sending a subscription transfer request to the first network function entity, where the subscription transfer request is configured to request to transfer a network analytics model subscription of the source network function entity to the target network function entity;
receiving an address of a second model file sent by the first network function entity according to the subscription transfer request;
acquiring the model file according to the address of the second model file.

The processor 600 is also configured to read the program and perform the following steps:
sending, in a case that the model of the target network analytics is successfully acquired, a response message of accepting the network analytics transfer to the source network function entity.

The processor 600 is also configured to read the program and perform the following steps:
receiving updated model information of the target network analytics sent by the source network function entity in an execution process of the network analytics transfer; updating the model according to the updated model information of the target network analytics.

The processor 600 is also configured to read the program and perform the following steps:
updating the model;
sending an update request to the first network function entity, where the update request includes updated model information of the target network function entity, and is configured to update a model corresponding to the model file by the first network function entity.

The processor 600 is also configured to read the program and perform the following steps:
executing, in a case that the model of the target network analytics is successfully acquired, the network analytics using the model to obtain an analytics result of the target network analytics.

What needs to be explained here is that the above-mentioned apparatus provided by the embodiment of the present disclosure can realize all the method steps realized by the above-mentioned method embodiment, and can achieve the same technical effect. Parts and beneficial effects in this embodiment that are the same as those in the method embodiment will not be described in detail here.

As shown in FIG. 7, the information processing apparatus of the embodiment of the present disclosure, applied to a source network function entity, which includes: a processor 700, configured to read the program in the memory 720, and execute the following process:
sending model information of a target network analytics to a target network function entity, so that the target network function entity acquires a model of the target network analytics according to the model information of the target network analytics and uses the model to execute network analytics, thereby obtaining an analytics result of the target network analytics,
where the target network analytics is a network analytics transferred from the source network function entity to the target network function entity.

In FIG. 7, the bus architecture may include any quantity of interconnected buses and bridges, specifically one or more processors represented by the processor 700 and various circuits of the memory represented by the memory 720 are linked together. The bus architecture may also link together various other circuits such as peripherals, voltage regulators, and power management circuits, etc., which are well known in the art and therefore will not be further described herein. The bus interface provides the interface. Transceiver 710 may be a plurality of elements, including a transmitter and a receiver, which provides a unit for communicating with various other apparatuses over transmission media. The processor 700 is responsible for managing the bus architecture and general processing, and the memory 720 may store data used by the processor 700 when performing operations.

The processor 710 may be a central processing unit (CPU), an application specific integrated circuit (ASIC), a field programmable gate array (FPGA) or a complex programmable logic device (CPLD), the processor may also adopt a multi-core architecture.

The processor 700 is responsible for managing the bus architecture and general processing, and the memory 720 may store data used by the processor 700 when performing operations.

The processor 700 is also configured to read the program and perform the following steps:
sending the model information of the target network analytics to the target network function entity in a preparation process of a network analytics transfer.

The model information of the target network analytics includes an address of a first model file, and/or, information of a first network function entity, where the first network function entity is configured to provide the model of target network analytics to the source network function entity.

The processor 700 is also configured to read the program and perform the following steps:
sending an analytics context to the target network function entity, where the analytics context includes the model information of the target network analytics.

The processor 700 is also configured to read the program and perform the following steps:
sending a request to the target network function entity, where the request includes an identity of the analytics context.

The processor 700 is also configured to read the program and perform the following steps:
receiving a response of accepting a network analytics transfer sent by the target network function entity;
   or,
receiving a response of refusing to accept the network analytics transfer sent by the target network function entity, and selecting other network function entities except the target network function entity to perform the network analytics transfer, where the response of refusing to accept the network analytics transfer represents that the target network function entity fails to obtain the model.

The processor 700 is also configured to read the program and perform the following steps:
sending updated model information of the target network analytics to the target network function entity in an execution process of the network analytics transfer;

The processor 700 is also configured to read the program and perform the following steps:
sending a cancel model subscription request to the first network function entity, where the cancel model subscription request is configured to indicate that the source network function entity cancels subscription of the model information of the target network analytics from the first network function entity.

What needs to be explained here is that the above-mentioned apparatus provided by the embodiment of the present disclosure can realize all the method steps realized by the above-mentioned method embodiment, and can achieve the same technical effect. Parts and beneficial effects in this embodiment that are the same as those in the method embodiment will not be described in detail here.

As shown in FIG. 8, the information processing apparatus in the embodiment of the present disclosure, applied to a target network function entity, which includes:
a first acquiring unit 801, configured to acquire model information of a target network analytics from a source network function entity;
a second acquiring unit 802, configured to acquire a model of the target network analytics according to the model information of the target network analytics;
a first processing unit 803, configured to execute a network analytics using the model to obtain an analytics result of the target network analytics, where the target network analytics is a network analytics transferred from the source network function entity to the target network function entity,
where the first acquiring unit is configured to acquire the model information of the target network analytics from the source network function entity in the preparation process of network analytics transfer,
where the model information of the target network analytics includes an address of a first model file, and/or, information of a first network function entity, where the first network function entity is configured to provide the model of target network analytics to the source network function entity.

Optionally, the first acquiring unit 801 may include:
a first receiving subunit, configured to acquire an analytics context of the target network analytics from the source network function entity, where the analytics context includes the model information of the target network analytics;
a first acquiring subunit, configured to obtain the model information of the target network analytics from the analytics context.

Optionally, in a case that the model information of the target network analytics includes the address of the first model file, the first processing unit may include:
a first acquiring subunit, configured to acquire a model file according to the address of the first model file;
a first processing subunit, configured to acquire the model of the target network analytics according to the model file.

Optionally, in a case that the model information of the target network analytics includes information of the first network function entity, the first processing unit may include:
a second acquiring subunit, configured to acquire a model file from the first network function entity according to the information of the first network function entity;
a second processing subunit, configured to acquire the model of the target network analytics according to the model file.

Optionally, the second acquiring subunit includes:
a first sending module, configured to send a subscription transfer request to the first network function entity, where the subscription transfer request is configured to request to transfer a network analytics model subscription of the source network function entity to the target network function entity;
a first receiving module, configured to receive an address of a second model file sent by the first network function entity according to the subscription transfer request;
a first acquiring module, configured to acquire the model file according to the address of the second model file.

Optionally, the second acquiring unit is further configured to send, by the target network function entity, a response message of accepting the network analytics transfer to the source network function entity, in a case that the target network function entity successfully acquires the model of the target network analytics.

Optionally, the apparatus may also include:
a first receiving unit, configured to receive updated model information of the target network analytics sent by the source network function entity in an execution process of the network analytics transfer;
a first updating unit, configured to update the model according to the updated model information of the target network analytics.

Optionally, the apparatus may also include:
a second updating unit, configured to update the model;
a first sending unit, configured to send an update request to the first network function entity, where the update request includes updated model information of the target network function entity, and is configured to update a model corresponding to the model file by the first network function entity.

Optionally, the first processing unit is configured to execute, in a case that the model of the target network analytics is successfully acquired, the network analytics using the model to obtain an analytics result of the target network analytics.

What needs to be explained here is that the above-mentioned apparatus provided by the embodiment of the present disclosure can realize all the method steps realized by the above-mentioned method embodiment, and can achieve the same technical effect. Parts and beneficial effects in this embodiment that are the same as those in the method embodiment will not be described in detail here.

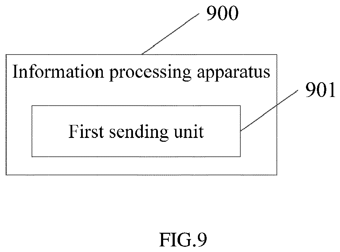

As shown in FIG. 9, the information processing apparatus in the embodiment of the present disclosure, applied to a source network function entity, which includes:
a first sending unit 901, configured to send model information of a target network analytics to a target network function entity, so that the target network function entity acquires a model of the target network analytics according to the model information of the target network analytics and uses the model to execute network analytics, thereby obtaining an analytics result of the target network analytics,
where the target network analytics is a network analytics transferred from the source network function entity to the target network function entity.

Optionally, the first sending unit is configured to send the model information of the target network analytics to the target network function entity by the source network function entity in a preparation process of the network analytics transfer.

Optionally, the model information of the target network analytics includes an address of a first model file, and/or, information of a first network function entity, where the first network function entity is configured to provide the model of the target network analytics to the source network function entity.

Optionally, the first sending unit is configured to send an analytics context to the target network function entity, where the analytics context includes model information of the target network analytics.

Optionally, the first sending unit is further configured to send a request to the target network function entity, where the request includes an identity of the analytics context.

Optionally, the apparatus may also include:
a first receiving unit, configured to receive a response of accepting a network analytics transfer sent by the target network function entity;
a second receiving unit, configured to receive a response of refusing to accept the network analytics transfer sent by the target network function entity, and select other network function entities except the target network function entity to perform the network analytics transfer, where the response of refusing to accept the network analytics transfer represents that the target network function entity fails to obtain the model.

Optionally, the apparatus may also include:
a second sending unit, configured to send the updated model information of the target network analytics to the target network function entity by the source network function entity in an execution process of the network analytics transfer.

Optionally, the apparatus may also include:
a third sending unit, configured to send a cancel model subscription request to the first network function entity, where the cancel model subscription request is configured to indicate that the source network function entity cancels subscription of the model information of the target network analytics from the first network function entity.

What needs to be explained here is that the above-mentioned apparatus provided by the embodiment of the present disclosure can realize all the method steps realized by the above-mentioned method embodiment, and can achieve the same technical effect. Parts and beneficial effects in this embodiment that are the same as those in the method embodiment will not be described in detail here.

It should be noted that the division of the units in the embodiment of the present disclosure is schematic, and is only a logical function division, and there may be another division manner in actual implementation. In addition, each functional unit in each embodiment of the present disclosure may be integrated into one processing unit, each unit may exist separately physically, or two or more units may be integrated into one unit. The above-mentioned integrated units can be implemented in the form of hardware or in the form of software functional units.

If the integrated unit is realized in the form of a software function unit and sold or used as an independent product, the integrated unit may be stored in a processor-readable storage medium. Based on such an understanding, the essence of the technical solution of the present disclosure or the part that contributes to the related technology or all or part of the technical solution may be embodied in the form of a software product, and the computer software product is stored in a storage medium. Several instructions are included to cause a computer device (which may be a personal computer, a server, or a network device, etc.) or a processor (processor) to execute all or part of the steps of the methods described in the various embodiments of the present disclosure. The aforementioned storage media include: U disk, mobile hard disk, read-only memory (ROM), random access memory (RAM), magnetic disk or optical disk and other media that can store program codes.

Embodiments of the present disclosure also provide a readable storage medium, the readable storage medium is stored with a program, and when the program is executed by a processor, each process of the above-mentioned transfer method for network analytics embodiment can be realized, and the same technical effect can be achieved. To avoid repetition, details are not repeated here, where the readable storage medium may be any available medium or data storage device that can be accessed by the processor, including but not limited to magnetic storage (such as floppy disk, hard disk, magnetic tape, magneto-optical disk (MO) etc.), optical storage (such as Compact Disk (CD), Digital Video Disc (DVD), Blu-ray Disc (BD), high-definition universal disc (HVD), etc. ), and semiconductor memory (such as ROM, Erasable Programmable Read-Only Memory (EPROM), Electrically Erasable Programmable Read Only Memory (EEPROM), non-volatile memory (NAND FLASH), solid state hard disk (Solid State Disk or Solid State Drive, SSD)), etc.

It should be noted that, in this document, the term "comprising", "including" or any other variation thereof is intended to cover a non-exclusive inclusion such that a process, method, article or apparatus comprising a set of elements includes not only those elements, but also includes other elements not expressly listed, or elements inherent in the process, method, article, or apparatus. Without further limitations, an element defined by the phrase "comprising a ..." does not preclude the presence of additional identical elements in the process, method, article, or apparatus comprising that element.

Through the description of the above embodiments, those skilled in the art can clearly understand that the methods of the above-mentioned embodiments can be implemented by means of software and a necessary general-purpose hardware platform, and of course also by hardware, but in many cases the former is better implementation. According to such an understanding, the essence of the technical solution of the present disclosure or the part that contributes to the related technology can be embodied in the form of a software product, and the computer software product is stored in a storage medium (such as ROM/RAM, magnetic disk, optical disk) , several instructions are included to cause a terminal (which may be a mobile phone, a computer, a server, an air conditioner, or a network device, etc.) to execute the methods described in various embodiments of the present disclosure.

It should be understood that the division of the above modules is only a division of logical functions, and may be fully or partially integrated into a physical entity or physically separated during actual implementation, and these modules can all be implemented in the form of calling software through processing elements; these modules can also be implemented in the form of hardware; some modules can also be implemented in the form of calling software through processing elements, and some modules can be implemented in the form of hardware. For example, the determining module may be a separate processing element, or may be integrated into a certain chip of the above-mentioned apparatus. In addition, it may also be stored in the memory of the above-mentioned apparatus in the form of program code, and a certain processing element of the above-mentioned apparatus may call and execute the functions of the above-mentioned determining module. The implementation of other modules is similar. In addition, all or part of these modules can be integrated together, and can also be implemented independently. The processing element mentioned here may be an integrated circuit with signal processing capability. In the implementation process, each step of the above-mentioned method or each module above can be completed by an integrated logic circuit of hardware in the processor element or an instruction in the form of software.

For example, each module, unit, subunit or submodule may be one or more integrated circuits configured to implement the above method, for example: one or more specific integrated circuits (Application Specific Integrated Circuit, ASIC), or, one or multiple microprocessors (digital signal processor, DSP), or, one or more field programmable gate arrays (FPGA), etc. For another example, when one of the above modules is implemented in the form of a processing element scheduling program code, the processing element may be a general-purpose processor, such as a central processing unit (CPU) or other processors that can call program codes. For another example, these modules can be integrated together and implemented in the form of a system-on-a-chip (SOC).

The terms "first", "second" and the like in the specification and claims of the present disclosure are configured to distinguish similar objects, and are not necessarily configured to describe a specific order or sequence. It should be understood that the data so used may be interchanged under appropriate circumstances such that the embodiments of the present disclosure described herein are practiced, for example, in sequences other than those illustrated or described herein. Furthermore, the terms "comprising" and "having", as well as any variations thereof, are intended to cover a non-exclusive inclusion, for example, a process, method, system, product or device comprising a series of steps or units is not necessarily limited to those steps or units explicitly listed, but may include other steps or elements not explicitly listed or inherent to the process, method, product or device. In addition, the use of "and/or" in the specification and claims means at least one of the connected objects, such as A and/or B and/or C, means that there are 7 situations including A alone, B alone, C alone, and both A and B exist, both B and C exist, both A and C exist, and A, B, and C all exist. Similarly, the use of "at least one of A and B" in the present specification and claims should be understood as "A alone, B alone, or both A and B exist".

The embodiments of the present disclosure have been described above in conjunction with the drawings, but the present disclosure is not limited to the above-mentioned specific implementations. The above-mentioned specific implementations are only illustrative and not restrictive. Under the inspiration of the present disclosure, without departing from the purpose of the present disclosure and the protection scope of the claims, those ordinarily skilled in the art can make many forms, all of which are within the protection of the present disclosure.

## Claims

1. A transfer method for network analytics, comprising:
acquiring, by a target network function entity, model information of a target network analytics from a source network function entity;
acquiring, by the target network function entity, a model of the target network analytics according to the model information of the target network analytics;
executing, by the target network function entity, a network analytics using the model to obtain an analytics result of the target network analytics,
wherein the target network analytics is a network analytics transferred from the source network function entity to the target network function entity.

2. The method according to claim 1, wherein the acquiring, by the target network function entity, model information of the target network analytics from the source network function entity comprises:
acquiring, by the target network function entity, the model information of the target network analytics from the source network function entity in a preparation process of a network analytics transfer.

3. The method according to claim 1 or 2, wherein the model information of the target network analytics comprises an address of a first model file, and/or, information of a first network function entity, wherein the first network function entity is configured to provide the model of target network analytics to the source network function entity.

4. The method according to claim 1, wherein the acquiring, by the target network function entity, model information of the target network analytics from the source network function entity comprises:
acquiring, by the target network function entity, an analytics context of the target network analytics from the source network function entity, wherein the analytics context comprises the model information of the target network analytics;
obtaining, by the target network function entity, the model information of the target network analytics from the analytics context.

5. The method according to claim 3, wherein in a case that the model information of the target network analytics comprises the address of the first model file, the acquiring, by the target network function entity, the model of the target network analytics according to the model information of the target network analytics, comprises:
acquiring, by the target network function entity, a model file according to the address of the first model file;
acquiring, by the target network function entity, the model of the target network analytics according to the model file.

6. The method according to claim 3, wherein in a case that the model information of the target network analytics comprises information of the first network function entity, the acquiring, by the target network function entity, the model of the target network analytics according to the model information of the target network analytics, comprises:
acquiring, by the target network function entity, a model file from the first network function entity according to the information of the first network function entity;
acquiring, by the target network function entity, the model of the target network analytics according to the model file.

7. The method according to claim 6, wherein the acquiring, by the target network function entity, the model file from the first network function entity according to the information of the first network function entity, comprises:
sending, by the target network function entity, a subscription transfer request to the first network function entity, wherein the subscription transfer request is configured to request to transfer a network analytics model subscription of the source network function entity to the target network function entity;
receiving, by the target network function entity, an address of a second model file, where the address of the second model file is sent by the first network function entity according to the subscription transfer request;
acquiring, by the target network function entity, the model file according to the address of the second model file.

8. The method according to claim 1 or 2, wherein after acquiring the model of the target network analytics, the method further comprises:
in a case that the target network function entity successfully acquires the model of the target network analytics, sending, by the target network function entity, a response message of accepting the network analytics transfer to the source network function entity.

9. The method according to claim 2, the method further comprises:
receiving, by the target network function entity, updated model information of the target network analytics sent by the source network function entity in an execution process of the network analytics transfer;
updating, by the target network function entity, the model according to the updated model information of the target network analytics.

10. The method according to claim 6, wherein after the obtaining the analytics result of the target network analytics, the method further comprises:
updating the model by the target network function entity;
sending, by the target network function entity, an update request to the first network function entity, wherein the update request comprises updated model information of the target network function entity, and is configured to update a model corresponding to the model file by the first network function entity.

11. The method according to claim 1, wherein the executing, by the target network function entity, the network analytics using the model comprises:
in a case that the model of the target network analytics is successfully acquired, executing, by the target network function entity, the network analytics using the model.

12. A transfer method for network analytics, comprising:
sending, by a source network function entity, model information of a target network analytics to a target network function entity, so that the target network function entity acquires a model of the target network analytics according to the model information of the target network analytics and uses the model to execute network analytics, thereby obtaining an analytics result of the target network analytics,
wherein the target network analytics is a network analytics transferred from the source network function entity to the target network function entity.

13. The method according to claim 12, wherein after the source network function entity sends the model information of the target network analytics to the target network function entity, the method further comprises:
receiving, by the source network function entity, a response of accepting a network analytics transfer sent by the target network function entity;
or,
receiving, by the source network function entity, a response of refusing to accept the network analytics transfer sent by the target network function entity, and selecting other network function entities except the target network function entity to perform the network analytics transfer, wherein the response of refusing to accept the network analytics transfer represents that the target network function entity fails to obtain the model.

14. A transfer apparatus for network analytics, applied to a target network function entity, comprising a memory, a transceiver, and a processor,
where the memory is configured to store a computer program; the transceiver is configured to send and receive data under control of the processor; and the processor is configured to read the computer program in the memory and execute the following operations of:
acquiring model information of a target network analytics from a source network function entity;
acquiring a model of the target network analytics according to the model information of the target network analytics;
executing a network analytics using the model to obtain an analytics result of the target network analytics,
wherein the target network analytics is a network analytics transferred from the source network function entity to the target network function entity.

15. The apparatus according to claim 14, wherein the processor is further configured to acquire the model information of the target network analytics from the source network function entity in a preparation process of a network analytics transfer.

16. The apparatus according to claim 14 or 15, wherein the model information of the target network analytics comprises an address of a first model file, and/or, information of a first network function entity, wherein the first network function entity is configured to provide the model of target network analytics to the source network function entity.

17. The apparatus according to claim 14, wherein the processor is further configured to:
acquire an analytics context of the target network analytics from the source network function entity, wherein the analytics context comprises the model information of the target network analytics;
obtain the model information of the target network analytics from the analytics context.

18. The apparatus according to claim 16, wherein the processor is further configured to:
acquire a model file according to the address of the first model file;
acquire the model of the target network analytics according to the model file.

19. The apparatus according to claim 16, wherein the processor is further configured to:
acquire a model file from the first network function entity according to the information of the first network function entity;
acquire the model of the target network analytics according to the model file.

20. The apparatus according to claim 19, wherein the processor is further configured to:
send a subscription transfer request to the first network function entity, wherein the subscription transfer request is configured to request to transfer a network analytics model subscription of the source network function entity to the target network function entity;
receive an address of a second model file sent by the first network function entity according to the subscription transfer request;
acquire the model file according to the address of the second model file.

21. The apparatus according to claim 14 or 15, wherein the processor is further configured to:
sending, in a case that the model of the target network analytics is acquired successfully, a response message of accepting the network analytics transfer to the source network function entity.

22. The apparatus according to claim 15, wherein the processor is further configured to:
receive updated model information of the target network analytics sent by the source network function entity in an execution process of the network analytics transfer;
update the model according to the updated model information of the target network analytics.

23. The apparatus according to claim 19, wherein the processor is further configured to:
update the model;
send an update request to the first network function entity, wherein the update request comprises updated model information of the target network function entity, and is configured to update a model corresponding to the model file by the first network function entity.

24. The apparatus according to claim 14, wherein the processor is further configured to:
execute, in a case that the model of the target network analytics is successfully acquired, the target network analytics using the model.

25. A transfer apparatus for network analytics, applied to a source network function entity, comprising a memory, a transceiver, and a processor,
wherein the memory is configured to store a computer program; the transceiver is configured to send and receive data under control of the processor; and the processor is configured to read the computer program in the memory and perform the following operations of:
sending model information of a target network analytics to a target network function entity, so that the target network function entity acquires a model of the target network analytics according to the model information of the target network analytics and uses the model to execute network analytics, thereby obtaining an analytics result of the target network analytics,
wherein the target network analytics is a network analytics transferred from the source network function entity to the target network function entity.

26. A transfer apparatus for network analytics, applied to a target network function entity, comprising:
a first acquiring unit, configured to acquire model information of a target network analytics from a source network function entity;
a second acquiring unit, configured to acquire a model of the target network analytics according to the model information of the target network analytics;
a first processing unit, configured to execute a network analytics using the model to obtain an analytics result of the target network analytics,
wherein the target network analytics is a network analytics transferred from the source network function entity to the target network function entity.

27. A transfer apparatus for network analytics, applied to a source network function entity, comprising:
a first sending unit, configured to send model information of a target network analytics to a target network function entity, so that the target network function entity acquires a model of the target network analytics according to the model information of the target network analytics and uses the model to execute network analytics, thereby obtaining an analytics result of the target network analytics,
wherein the target network analytics is a network analytics transferred from the source network function entity to the target network function entity.

28. A processor-readable storage medium, the processor-readable storage medium stores a computer program, the computer program is configured to cause the processor to execute the method according to any one of claims 1 to 11; or, the computer program is configured to cause the processor to execute the method according to any one of claims 12-13.
